# EUROPEAN PATENT SPECIFICATION

(11) **EP 2 548 440 B1**
(45) Date of publication and mention of the grant of the patent: **16.08.2017**
(21) Application number: 12001437.8
(22) Date of filing: 02.03.2012
(51) Int. Cl.: A01N 43/90, A01N 53/00, A01N 43/653, A01P 7/02, A01P 7/04, A01P 3/00, A01N 25/04

(54) **Product for treatment of plants**
Produkt zur Behandlung von Pflanzen
Produit pour le traitement de plantes

(30) Priority: 03.03.2011 ES 201130281
(43) Date of publication of application: 23.01.2013
(73) Proprietor: QUIMICA DE MUNGUIA, S.A., 48100 Munguia / Bizkaia (ES)
(72) Inventor: Perez de los Bueys, Carmelo, 48100 Munguia (Bizkaia) (ES)
(74) Representative: Tari Lazaro, Aida

(56) References cited:
- EP-A1- 0 385 076
- WO-A1-91/01640
- WO-A1-03/011031
- WO-A1-2006/069580
- WO-A2-2007/009775
- GB-A- 2 220 856
- US-A- 5 177 098
- DATABASE CAPLUS [Online] CHEMICAL ABSTRACTS SERVICE, COLUMBUS, OHIO, US; 26 September 2006 (2006-09-26), L. Chen & S. Sun: "Composite insecticide microemulsion containg abamectin and pyrethrins", XP002689139, retrieved from STN accession no. 2006:991563 Database accession no. 2006:991563 & CN 1 287 783 A (WEIERDA CHEMICAL CO LTD ZHEJIA [CN]) 21 March 2001 (2001-03-21)
- "238 deltamethrin" In: "The Pesticide Manual - A World Compendium - 15th Edition", 1 January 2009 (2009-01-01), BRITISH CROP PROTECTION COUNCIL, ALTON, HAMPSHIRE, GU34 2QD, UNITED KINGDOM, XP055013060, ISBN: 978-1-90-139618-8 pages 313-315,
- TOMLIN C D S: "Abamectin & Etoxazole (ABAMECTIN INSECTICIDE, ACARICIDE, NEMATICIDE)", 1 January 2009 (2009-01-01), PESTICIDE MANUAL, XX, XX, PAGE(S) I-IV, XP003032371,
- TOMLIN C (ED) ED - TOMLIN C D S (ED): "The Pesticide Manual, Twelft Edition, TEBUCONAZOLE - MIXTURES", 1 January 2000 (2000-01-01), PESTICIDE MANUAL. WORLD COMPENDIUM; [PESTICIDE MANUAL], FARNHAM : BCPC, GB, PAGE(S) 864 - 865, XP002388456, ISBN: 978-1-901396-12-6

## Description

### OBJECT OF THE INVENTION

The present invention relates to a product for the treatment of plants, said product offering a triple action since it acts as an insecticide, an acaricide and a fungicide, in other words, it concerns a formulation in which a triple effect is achieved in a single product.

The object of the invention is to succeed in being able to use a single product to treat insects, fungi and acarids in plants, the product having a limited and controlled toxicity and risk for the user, for the plant and for the environment.

### BACKGROUND OF THE INVENTION

As is known, plants frequently present problems, sometimes due to insects, sometimes fungi, and on other occasions acarids, and they can even sometimes be attacked by a combination of them.

It has to be borne in mind that a large part of the non-professional public might notice some disease in their plants but they nevertheless do not distinguish whether it is an attack from insects, or it concerns an attack from fungi, or is due to an attack from acarids, or even a combination.

Moreover, products for treatment are currently sold independently, in other words, there exists a product for treating insects, another product for treating fungi and another product for treating acarids, and bearing in mind that the public mostly does not distinguish the type of disease which their plant or plants have, so they do not know what type of product they have to buy.

Furthermore, it has to be borne in mind that though triple action products, in other words, for treating the three problems referred to earlier, were marketed in the past, nevertheless, for legislative, toxicological and phytosanitary reasons, the triple action products existing on the market have been banned from phytosanitary use following the coming into force of Directive 91/414/EEC.

CN1287783A1 discloses a formulation for agricultural use that comprises Deltamethrin in a proportion of 0.5% and abamectin in a proportion of 1.5% but no fungicide. WO2007/009775A2 discloses formulations of Tebuconazole and Abamectin comprising proportions of total active ingredients between 0.1 and 20%, especially between 0.1 and 15%, in general, 0.5 to 99.9%, especially 1 to 95% and advantageously 1 to 50% by mass of active ingredients. EP0385076A1 discloses combinations of Tebuconazole with Deltamethrin in a composition for preserving wood or wooden working materials.

### DESCRIPTION OF THE INVENTION

The product that is claimed has been conceived in order to solve the problem stated above, since it allows a product to be obtained that is perfectly authorized, in other words, with risks that are controlled at toxicological levels for the user, the environment and for plants, in such a way that the product offers a triple effect that has been demonstrated, in other words, that the insecticide power, the acaricide power and the fungicide power will be associated in a single product.

More specifically, in accordance with the invention, the product is obtained by means of an aqueous microemulsion involving the components Deltamethrin, as insecticide, Tebuconazole as fungicide and Abamectin as acaricide, all of which are molecules that appear registered in, among others, Annexe I of Directive 91/414/EEC, and which can therefore be considered as permitted according to the Regulation. Nevertheless, the formulate can also be carried out in other types of formulations such as emulsions, suspensions, suspo-emulsions, microencapsutations, etc., though at all times maintaining the combination of these three molecules.

In the present case the product comes ready for use in order to be able to minimize the risk for the user so that he or she does not have to carry out the mixing as would occur with a concentrated product for diluting in water.

Deltamethrin has activity both by contact and by ingestion, with a broad spectrum of efficacy even in resistant species, with a very good persistence and stability, which causes the effect of the product to continue during a sufficiently long period of time, combining both insecticide activity against adult individuals and a repellence activity against insects in treated plants.

Deltamethrin has been chosen for its efficacy/risk/cost profile, and bearing in mind its stability to light and to temperatures, which makes it more persistent in time once it has been applied to the plant

It has to be born in mind that the toxicity of this component, at application doses, is very low, less than 50000 mg/kg, in other words, of the order of 15 times less than common salt and twice as less as sugar, a characteristic which makes the molecule in question have an optimum profile for use in the domestic sphere, since the risk of primary and secondary intoxications as a result of its use is virtually eliminated, even accidental intoxication, such as due to ingestion by children for example, is very unlikely.

In terms of Tebuconazole, as the fungicide component, it offers a broad spectrum and acts by contact, and is effective for controlling diseases caused by fungi and by ectoparasites, such as oidium, rot caused by rose blackspot, etc. Tebuconazole has been chosen for its efficacy/risk/cost profile, and bearing in mind the broad spectrum of action on the most common fungi in ornamental plants in gardens.

Finally, in terms of the component Abamectin, this is an insecticide-acaricide which acts by contact and ingestion, and is very effective against acarids.

Abamectin has been chosen for its efficacy/risk/cost profile, and bearing in mind the broad acaricide spectrum on the most common acarids on plants, and because in itself it also has insecticide power, though we consider that by strengthening the formulate with deltamethrin, an insecticide which, as we have already explained, has great stability, persistence and spectrum of activity on the most common insects on plants, the resulting product has a much more complete action and meets the expectations of the user.

So, the procedure for obtaining that product is based on an aqueous microemulsion (though it could come in other forms, such as emulsions, suspo-emulsions, suspensions, microencapsulations, etc.) with percentages of from 0.00025 to 0.01 % of the component Deltamethrin; from 0.00025 to 0.01 % of Abamectin, and from 0.005 to 0.05 % of Tebuconazole, in such a way that those minimum proportions in an aqueous emulsion will reduce as far as possible the toxicological and eco-toxicological effects, likewise eliminating VOCs, or volatile organic compounds, in the formulation, all this in such a way that the association of the components or materials referred to provides an advantageous situation in terms of the safety of the product with respect to the environment and to the applicator, all the more so within its use at the domestic sphere.

Indeed, with the invention, a triple action product is obtained which acts as a fungicide, as an insecticide and as an acaricide, for use on outdoor domestic gardening, which can be used by the general public for protecting their ornamental plants and against common pests which attack the plants and which concern insects, fungi and acarids.

The product will preferably be applied by means of dusting of the appropriate plant, independently of whether or not it has problems solely with insects, or has problems with fungi or acarids, or two of them combined, or even all three.

### EXAMPLE OF EMBODIMENT

Mixed in a receptacle, forming a 100% aqueous emulsion, were: Tebuconazole, Abamectin and Deltamethrin, in a percentage of the latter of 0.00025 %, in a percentage of 0.01% of Abamectin and in a percentage of 0.01% of Tebuconazole, being completed up to 100% with water, with a product being obtained which, following the trials that were conducted, has demonstrated that it is effective in plants with problems of insects, problems of fungi and problems of acarids, and even with combined problems of insects, fungi and acarids, with a limited and controlled risk of intoxication for the persons applying the product on the plants, and which, when used correctly, has limited risk for the environment and no risks for the plant on which it was applied.

## Claims

1. A domestic product for treatment of plants, specifically plants with problems of insects, fungi and acarids, whether independently or combined, comprising a combination of deltamethrin, abamectin and a fungicide in the form of an aqueous microemulsion, emulsion, suspoemulsion or suspension of microcapsules, **characterized in that** it comprises
Deltamethrin in a proportion of between 0.00025 and 0.01% by weight,
Abamectin in a proportion of between 0.00025 and 0.01% by weight, and
Tebuconazole as the fungicide in a proportion of between 0.005 and 0.05% by weight.

## Patentansprüche

1. Ein Haushaltsprodukt zur Behandlung von Pflanzen, speziell Pflanzen mit Problemen mit Insekten, Pilzen und Akariden, ob unabhängig oder kombiniert, bestehend aus einer Kombination aus Deltamethrin, Abamectin und einem Fungizid in Form einer wässrigen Mikroemulsion, Emulsion, Suspoemulsion oder Suspension von Mikrokapseln, **dadurch gekennzeichnet, dass** es Deltamethrin in einem Anteil von 0,00025 bis 0,01 % Gew., Abamectin in einem Anteil von 0,00025 bis 0,01 %Gew und Tebuconazol als Fungizid in einem Anteil von 0,005 bis 0,05 % Gew. umfasst.

## Revendications

1. Un produit domestique destiné au traitement des plantes, en particulier des plantes présentant des problèmes d'insectes, de champignons et d'acariens, de façon indépendante ou associée, comprenant une combinaison de deltaméthrine, d'abamectine et d'un fongicide sous forme d'une microémulsion, d'une émulsion, d'une suspo-émulsion aqueuse ou d'une suspension de microcapsules, **caractérisé en ce qu'**il contient de la deltaméthrine dans une proportion comprise entre 0,00025 et 0,01% en poids, de l'abamectine dans une proportion comprise entre 0,00025 et 0,01% en poids, et du tébuconazole comme fongicide dans une proportion comprise entre 0,005 et 0,05% en poids.
